# EUROPEAN PATENT SPECIFICATION

(11) **EP 0 596 428 B1**
(45) Date of publication and mention of the grant of the patent: **13.08.1997**
(21) Application number: 93117597.0
(22) Date of filing: 29.10.1993
(51) Int. Cl.: B60Q 1/068

(54) **Headlight, particularly for vehicles**
Scheinwerfer für Fahrzeuge
Phare pour véhicules

(30) Priority: 03.11.1992 IT TO920895
(43) Date of publication of application: 11.05.1994
(73) Proprietor: MAGNETI MARELLI S.p.A., 20145 Milano (IT)
(72) Inventor: Rivoira, Luigi, I-10090 Sangano (IT)
(74) Representative: Jorio, Paolo, Dr. Ing.

(56) References cited:
- DE-A- 3 429 040
- US-A- 5 065 298

## Description

The present invention relates to a headlight, particularly for vehicles, of the type comprising a reflector; and a plurality of devices for fixing the reflector to supporting means, each fixing device comprising two elements connected together by a joint, and joining means to connect a first element of the said two elements integrally to the reflector.

Such a headlight is known from DE-A-3 429 040.

In general, in known headlights of the type specified above, the joining means mentioned above comprise a plurality of parts whose production and assembly are relatively difficult and costly.

The object of the present invention is to provide a headlight free of the disadvantages described above.

According to the present invention, a headlight particularly for vehicles, of the type specified above, is provided, and is characterised in that the said first element comprises a stud, and that the said joining means comprise at least a first tubular body integral with the reflector and engaged by friction with the said stud, and a second tubular body fitted by pressure over the first tubular body to secure the said stud inside the first tubular body; the said first element and second tubular body being made from a single piece of moulded material, in which the said first element and second body were disposed coaxially with respect to each other, with the first partially engaged inside the second, and were connected integrally with each other by connecting means with a predetermined breaking stress.

According to a preferred embodiment of the headlight according to the present invention, the first element and the second tubular body are connected together with a snap fit. Preferably, the second tubular body also comprises a portion projecting beyond a free end of the first tubular body, the said first element engaging with a snap fit with the said projecting portion.

The invention will now be described with reference to the attached drawings, which illustrate some non-restrictive examples of embodiment, and in which:
Figure 1 shows, in section, a portion of a first preferred embodiment of the reflector according to the present invention;
Figure 2 shows, in axial section, an original piece from which certain parts of the headlight shown in Figure 1 are obtained;
Figure 3 is a plan view of the piece shown in Figure 2;
Figure 4 is a section through the line IV-IV in Figure 2;
Figure 5 shows, in section, a portion of a second preferred embodiment of the reflector according to the present invention;
Figure 6 shows, in axial section, an original piece from which certain parts of the headlight shown in Figure 5 are obtained;
Figure 7 is a plan view of the piece shown in Figure 6;
Figure 8 is a section through the line VIII-VIII in Figure 6.

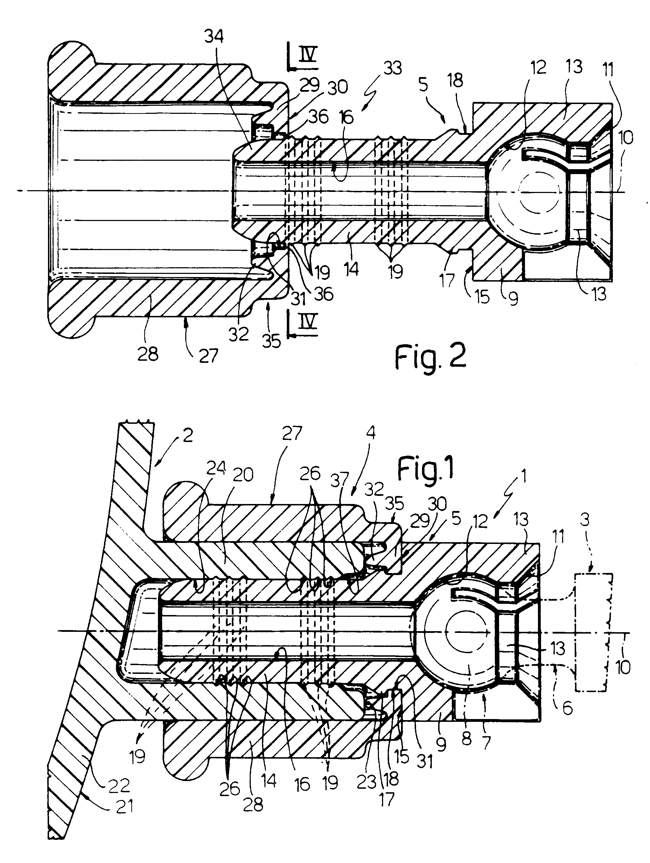

In Figures 1 to 4, 1 indicates a headlight for vehicles, particularly motor vehicles, in its entirety, comprising a reflector 2 and an external support 3, which comprises a plurality of devices (4) (of which only one is shown) for fixing the reflector 2. In general, there are three of the devices 4, of which two are of adjustable length and one, disposed in an intermediate position between the other two, has a fixed length.

Each device 4 comprises a first and a second element, of which the first, indicated by 5, is connected to the reflector 2, while the second, indicated by 6, forms part of the external support 3, and is connected to the first by a ball joint 7.

According to the illustration in Figure 1, the element 6 is an elongated element having a spherical head 8 at its free end, while the element 5 comprises a cylindrical head 9 having an axis 10 and provided, on its surface at one axial extremity, with an aperture 11 communicating with a spherical socket 12 which is formed centrally inside the head 9 and which communicates laterally with the exterior through radial incisions forming, in the head 9, a plurality of elastically deformable petals 13 capable of permitting the snap fitting of the spherical head 8 inside the spherical socket 12 to form the joint 7.

The element 5 also comprises a stud 14 which is coaxial with the axis 10 and projects from a central portion of a surface 15 at the axial extremity of the head 9 opposite that which has the aperture 11. The stud 14 is a substantially cylindrical tubular stud having an axial through hole 16 communicating with the socket 12, and is provided with an annular external flange 17 of trapezoidal section, which is disposed adjacent to the surface 15 and forms, in conjunction with the said surface 15, an annular groove 18. Finally, the stud 14 is provided with a plurality of annular external ribs 19.

According to the illustration in Figure 1, each device 4 also comprises a tubular body 20 projecting from a rear surface 21 of a parabolic element 22 of the reflector 2 and integral with the parabolic element 22. The body 20 terminates, at its free end, in a flat surface 23 which is perpendicular to the axis 10 and has a substantially cylindrical cavity 24 coaxial with the axis 10, this cavity being provided with a plurality of annular grooves 26, which are engaged with a snap fit with corresponding ribs 19, and are disposed in such a way as to keep the stud 14 with its flange 17 outside the cavity 24.

According to the illustration in Figure 1, each device 4, finally, comprises a further tubular body or cover 27 of substantially cylindrical shape, which has a lateral wall 28 fitted over the body 20 and an end wall 29 which has a flat outer surface 30 and is provided with a central hole 31 coaxial with the axis 10, and with an internal annular rib 32 adjacent to the wall 28 and parallel to it. The stud 14 extends through the hole 31, and the wall 29 is disposed with its surface 30 in contact with the surface 15 of the head 9, with its rib 32 in contact with the surface 23 of the body 20, and with its inner periphery engaged with a snap fit inside the groove 18.

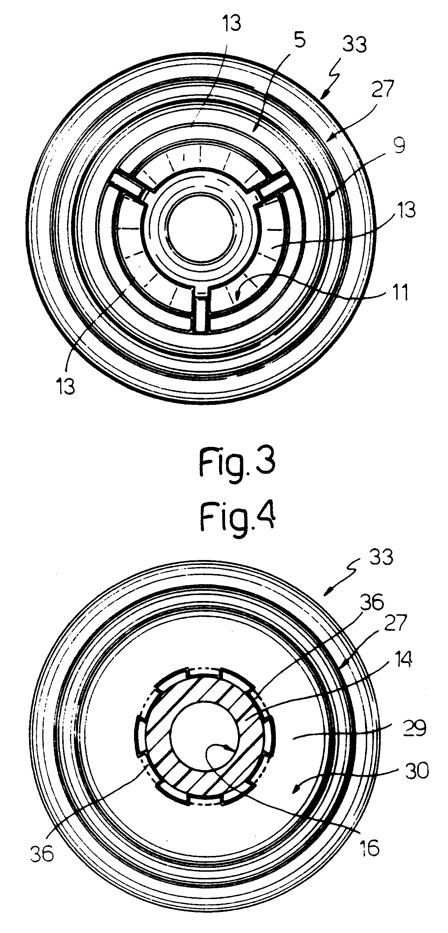

According to the illustration in Figure 2, the element 5 and the cover 27 are produced from a single piece 33, preferably made of moulded plastic material, in which the element 5 and the cover 27 are disposed coaxially with respect to each other and to the axis 10, and the stud 14 engages with the hole 31 with its end portion 34 whose length is slightly greater than the length of an end portion 35 of the cover 27 formed by the wall 29 and the rib 32. According to the more detailed illustration in Figure 4, the stud 14 and the wall 29 are made integral with each other, in the relative position described above, by means of a plurality of radial elements 36 with a predetermined breaking stress interposed between the inner periphery of the wall 29 and the outer surface of the stud 14.

In use, the piece 33 is fitted on the reflector 2 with its cover 27 fitted over the corresponding tubular body 20 until the rib 32 is made to bear on the surface 23 and the end portion 34 of the stud 14 is made to engage with a corresponding enlarged end portion 37 of the cavity 24. It is then possible to break the radial elements 36 by striking the head 9, for example with a hammer or other similar tool, and to force the stud 14 to slide in the cavity 24 until the ribs 19 are made to engage with the grooves 26, the surface 30 of the wall 29 is made to contact the surface 15 of the head 9, and the inner periphery of the wall 29 is made to engage with a snap fit with the groove 18 so that the stud 14 is secured inside the cavity 24. The corresponding fixing device 4 is then completed by snap inserting the spherical head 8 of the element 6 into the spherical socket 12 of the head 9.

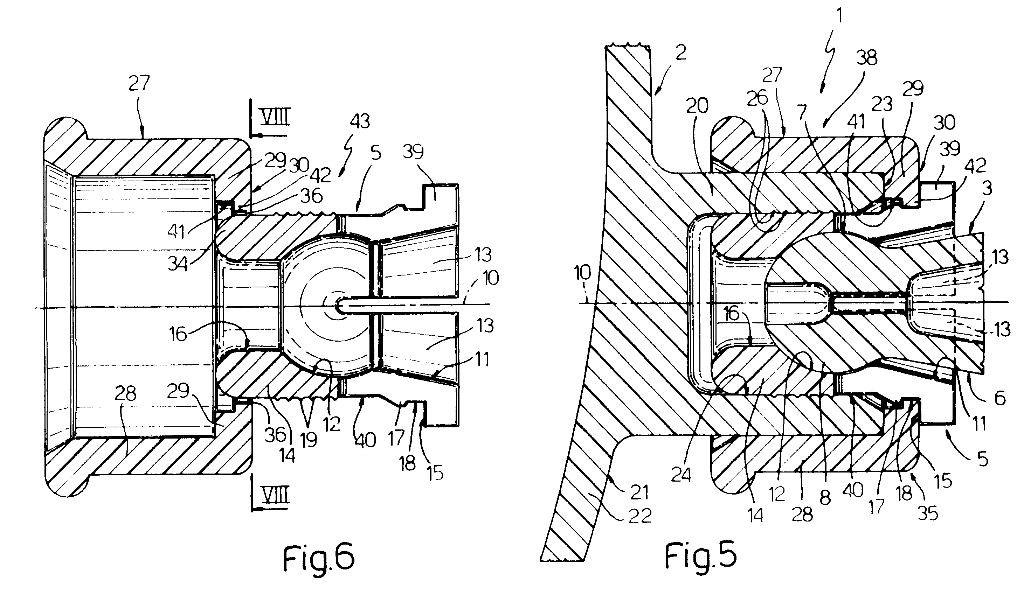

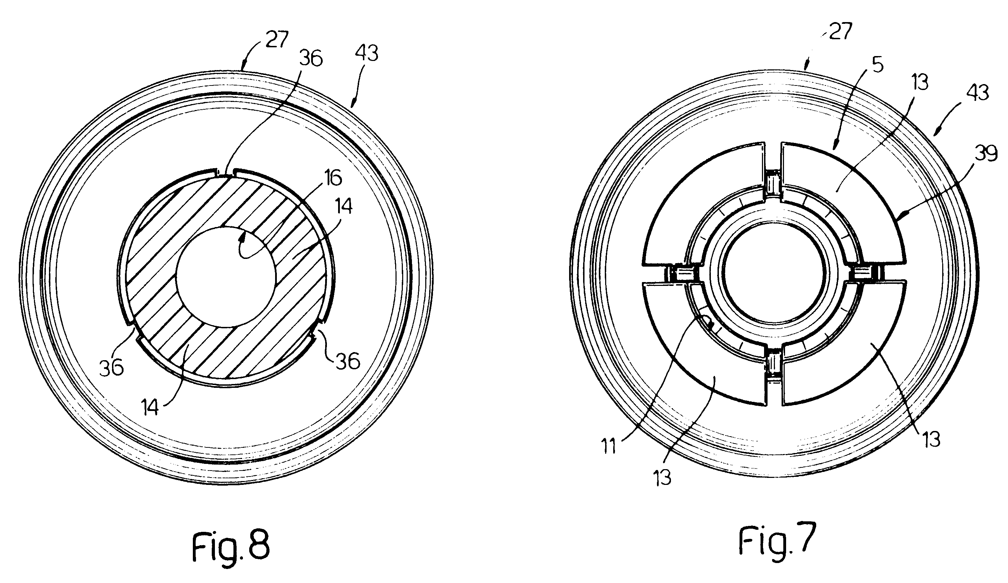

In the embodiment illustrated in Figures 5 to 8, the fixing device 4 is replaced by a fixing device 38, similar to the device 4, whose components are identified, where possible, by the same reference numbers as those identifying the corresponding parts of the device 4.

In the device 38, the element 5 does not have the head 9, this being replaced by a flange 39 carrying the surface 15; additionally, the aperture 11 is formed through the flange 39 and communicates with a spherical socket 12, which is formed inside the stud 14 in a portion of the hole 16, and terminates externally in petals 13 which extend through the flange 39 and a portion 40 of the stud 14 which is adjacent to the flange 39 and carries the flange 17.

In the cover 27 of the device 38, the rib 32 is absent, and the wall 29 is provided with an axial hole 41 having, in its extreme outer portion, an internal annular flange 42 delimiting the hole 31 and engaging with a snap fit with the groove 18.

In a similar way to that described for the element 5 and the cover 27 of the device 4, the element 5 and the cover 27 of the device 38 are also obtained, according to the illustration in Figure 6, from a single piece 43, preferably consisting of moulded plastic material, in which the element 5 and the cover 27 are disposed coaxially with respect to each other and to the axis 10, and an end portion 34 of the stud 14, with a length substantially equal to the thickness of the wall 29, engages with the hole 31. According to the more detailed illustration in Figure 8, the stud 14 and the wall 29 are made integral with each other in the relative position described above by means of a plurality of radial elements 36 with a predetermined breaking stress interposed between the inner periphery of the flange 42 and the outer surface of the stud 14.

In use, when the cover 27 of the piece 43 has been fitted over the tubular body 20, the spherical head 8 of the element 6 is inserted with a snap fit into the socket 12 and then pushed towards the tubular body 20 in such a way as to break the radial elements 36 and to cause the stud 14 to be forced into the cavity 24, and the flange 42 to be snap-fitted inside the groove 18. In this way the stud 14 is secured inside the cavity 24 while the head 8 is simultaneously secured inside the socket 12 whose petals 13 are transversely secured by the flange 42 in their closed position.

## Claims

1. Headlight (1), particularly for vehicles, of the type comprising a reflector (2); and a plurality of devices (4) (38) for fixing the reflector (2) to supporting means (3), each fixing device (4) (38) comprising two elements (5, 6) connected together by a joint (7), and joining means (20, 27) to connect a first element (5) of the said two elements (5, 6) integrally to the reflector (2); characterised in that the said first element (5) comprises a stud (14), and that the said joining means (20, 27) comprise at least a first tubular body (20) integral with the reflector (2) and engaged by friction with the said stud (14), and a second tubular body (27) fitted by pressure over the first tubular body (20) to secure the said stud (14) inside the first tubular body (20); the said first element (5) and second tubular body (27) being made from a single piece (33) (43) of moulded material, in which the said first element (5) and second tubular body (27) were disposed coaxially with respect to each other, with the first (5) partially engaged inside the second (27), and were connected integrally with each other by connecting means (36) with a predetermined breaking stress.

2. Headlight according to Claim 1, characterised in that the first element (5) and the second tubular body (27) are connected together with a snap fit.

3. Headlight according to Claim 1 or 2, characterised in that the second tubular body (27) comprises a portion (35) projecting beyond a free end (23) of the first tubular body (20), the said first element (5) engaging with a snap fit with the said projecting portion (35).

4. Headlight according to any one of the preceding claims, characterised in that the first and second means of radial engagement (19, 26) are carried by the stud (14) and by the first tubular body (20) respectively, so that they interact in order to axially secure the stud (14) inside the first tubular body (20).

5. Headlight according to Claims 2 and 3, characterised in that the said joint (7) is a ball joint; the first element (5) having an axial spherical socket (12) delimited externally, at least in part, by flexible petals (13) separated from each other by axial incisions made in the first element (5).

6. Headlight according to Claim 5, characterised in that the said spherical socket (12) is disposed outside the said projecting portion (35) of the second tubular body (27).

7. Headlight according to Claim 5, characterised in that the said spherical socket (12) extends through the said projecting portion (35) of the second tubular body (27), the said petals (13) being secured radially by the said projecting portion (35).

## Patentansprüche

1. Frontscheinwerfer (1), insbesondere für Fahrzeuge der Bauart, umfassend einen Reflektor (2); und eine Mehrzahl von Einrichtungen (4) (38) zum Fixieren des Reflektors (2) an Stützmittel (3), wobei jede Fixiereinrichtung (4) (38) zwei miteinander durch eine Verbindung (7) verbundene Elemente (5, 6) und Verbindemittel (20, 27) zum Verbinden eines ersten Elements (5) der besagten beiden Elemente (5, 6) einstückig mit dem Reflektor (2) umfaßt, dadurch gekennzeichnet, daß das erste Element (5) einen Schraubstift (14) umfaßt, und daß das Verbindemittel (20, 27) wenigstens einen mit dem Reflektor (2) einstückigen ersten rohrförmigen Korpus (20), der reibend mit dem Schraubstift (14) in Eingriff steht, und einen zweiten rohrförmigen Korpus (27), der durch Druck über den ersten rohrförmigen Korpus (20) zur Befestigung des Schraubstifts (14) innerhalb des ersten rohrförmigen Korpus (20) eingepreßt ist, umfaßt; wobei das erste Element (5) und der zweite rohrförmige Korpus (27) aus aus einem einzigen Stück (33, 43) gegossenen Material hergestellt sind, in das das erste Element (5) und der zweite rohrförmige Korpus (27) koaxial zueinander angeordnet wurden, wobei ersteres (5) teilweise in zweiterem (27) eingefügt ist und einstückig miteinander durch Verbindungsmittel (36) mit einer vorbestimmten Bruchspannung verbunden wurden.

2. Frontscheinwerfer nach Anspruch 1, dadurch gekennzeichnet, daß das erste Element (5) und der zweite rohrförmige Korpus (27) über einen Schnappverschluß miteinander verbunden sind.

3. Frontscheinwerfer nach Anspruch 1 oder 2, dadurch gekennzeichnet, daß der zweite rohrförmige Korpus (27) einen Abschnitt (35) umfaßt, der jenseits eines freien Endes (23) des ersten rohrförmigen Korpus (20) vorsteht, wobei das erste Element (5) über einen Schnappverschluß mit dem vorstehenden Abschnitt (35) in Eingriff steht.

4. Frontscheinwerfer nach einem der vorhergehenden Ansprüche, dadurch gekennzeichnet, daß die ersten und zweiten Mittel für den radialen Eingriff (19, 26) von dem Schraubstift (14) und durch den ersten rohrförmigen Korpus (20) jeweils getragen sind, so daß sie zusammenwirken, um den Schraubstift (14) in dem ersten rohrförmigen Korpus (20) axial zu befestigen.

5. Frontscheinwerfer nach Anspruch 2 oder 3, dadurch gekennzeichnet, daß die Verbindung (7) ein Kugelgelenk ist; wobei das erste Element (5) einen axialen sphärischen Sockel (12) aufweist, der nach außen wenigstens teilweise durch flexible Backen (13) begrenzt ist, die durch axiale in dem ersten Element (5) ausgeführte axiale Einschnitte voneinander beabstandet sind.

6. Frontscheinwerfer nach Anspruch 5, dadurch gekennzeichnet, daß der sphärische Sockel (12) außerhalb des vorstehenden Abschnitts (35) des zweiten rohrförmigen Korpus (27) angeordnet ist.

7. Frontscheinwerfer nach Anspruch 5, dadurch gekennzeichnet, daß der sphärische Sockel (12) sich durch den vorstehenden Abschnitt (35) des zweiten rohrförmigen Korpus (27) erstreckt, wobei die Backen (13) radial durch den vorstehenden Abschnitt (35) befestigt sind.

## Revendications

1. Phare (1), en particulier pour véhicules, du type comprenant un réflecteur (2) et une pluralité de dispositifs (4) (38) pour fixer le réflecteur (2) à des moyens de support (3), chaque dispositif de fixation (4) (38) comprenant deux éléments (5, 6) raccordés mutuellement par une articulation (7) et des moyens d'assemblage (20, 27) pour raccorder, en un seul bloc, un premier élément (5) desdits deux éléments (5, 6) au réflecteur (2), caractérisé en ce que ledit premier élément (5) comprend un tenon (14), et en ce que lesdits moyens d'assemblage (20, 27) comprennent au moins un premier corps tubulaire (20) solidaire du réflecteur (2) et mis en prise par friction avec ledit tenon (14), et un second corps tubulaire (27) ajusté à force sur le premier corps tubulaire (20) pour bloquer ledit tenon (14) à l'intérieur du premier corps tubulaire (20), ledit premier élément (5) et ledit second corps tubulaire (27) étant réalisés à partir d'une pièce unique (33) (43) de matériau moulé, dans laquelle ledit premier élément (5) et ledit second corps tubulaire (27) étaient disposés coaxialement l'un par rapport à l'autre, avec le premier (5) partiellement engagé à l'intérieur du second (27), et étaient raccordés en une seule pièce l'un à l'autre par des moyens de raccordement (36) à contrainte de rupture prédéterminée.

2. Phare selon la revendication 1, caractérisé en ce que le premier élément (5) et le second corps tubulaire (27) sont assemblés mutuellement par encliquetage.

3. Phare selon la revendication 1 ou 2, caractérisé en ce que le second corps tubulaire (27) comprend une partie (35) en saillie au-delà d'une extrémité libre (23) du premier corps tubulaire (20), ledit premier élément (5) venant en prise par encliquetage avec ladite partie en saillie (35).

4. Phare selon l'une quelconque des précédentes revendications, caractérisé en ce que les premier et second moyens d'engagement radial (19, 26) sont portés par le tenon (14) et par le premier corps tubulaire (20), respectivement, de manière à coopérer pour bloquer axialement le tenon (14) à l'intérieur du premier corps tubulaire (20).

5. Phare selon les revendications 2 et 3, caractérisé en ce que ladite articulation est une articulation à rotule, le premier élément (5) comprenant une tulipe sphérique axiale (12) délimitée extérieurement, au moins en partie, par des pétales flexibles (13) séparés l'un de l'autre par des incisions axiales pratiquées dans le premier élément (5).

6. Phare selon la revendication 5, caractérisé en ce que ladite tulipe sphérique (12) est disposée à l'extérieur de ladite partie en saillie (35) du second corps tubulaire (27).

7. Phare selon la revendication 5, caractérisé en ce que ladite tulipe sphérique (12) s'étend à travers ladite partie en saillie (35) du second corps tubulaire (27), lesdits pétales (13) étant bloqués radialement par ladite partie en saillie (35).
